# EUROPÄISCHE PATENTSCHRIFT

(11) **EP 1 261 052 B1**
(45) Veröffentlichungstag und Bekanntmachung des Hinweises auf die Patenterteilung: **04.01.2012**
(21) Anmeldenummer: 02011021.9
(22) Anmeldetag: 17.05.2002
(51) Int. Cl.: H01M 8/02, H01M 2/08

(54) **Dichtung**
Sealing
Joint d'étanchéité

(30) Priorität: 26.05.2001 DE 10125776
(43) Veröffentlichungstag der Anmeldung: 27.11.2002
(73) Patentinhaber: ElringKlinger AG, 72581 Dettingen (DE)
(72) Erfinder: Zerfass, Hans-Rainer, Dr., 65232 Taunusstein (DE); Diez, Armin, 73252 Lenningen (DE)
(74) Vertreter: Hoeger, Stellrecht & Partner Patentanwälte

(56) Entgegenhaltungen:
- EP-A- 0 907 215
- DE-A- 4 333 478
- DE-C- 19 607 947
- PATENT ABSTRACTS OF JAPAN Bd. 018, Nr. 167 (E-1528), 22. März 1994 (1994-03-22) & JP 05 343079 A (NIPPON TELEGR & TELEPH CORP <NTT>), 24. Dezember 1993 (1993-12-24)

## Beschreibung

Die vorliegende Erfindung betrifft eine Dichtung zur Anordnung zwischen zwei abzudichtenden, elektrisch leitfähigen Bauteilen, insbesondere zwischen zwei Bauteilen eines Brennstoffzellenblockverbunds.

Solche Dichtungen sind aus dem Stand der Technik bekannt.

Insbesondere ist es bekannt, eine solche Dichtung aus einem Glaslot zu bilden.

Ein solches Glaslot ist beispielsweise in der EP 0 907 215 A1 beschrieben.

Wird eine solche Glaslot-Dichtung bei vergleichsweise hohen Betriebstemperaturen verwendet, wie sie beispielsweise in einer Hochtemperatur-Brennstoffzelle herrschen (z.B. ungefähr 800°C), so hat dies unter anderem den Nachteil, dass das Glaslot bei einer solchen Betriebstemperatur bereits eine vergleichsweise hohe elektrische Leitfähigkeit aufweist, so dass die elektrische Isolation zwischen den abzudichtenden, elektrisch leitfähigen Bauteilen nicht mehr hinreichend gewährleistet ist und sich infolgedessen der Wirkungsgrad der Brennstoffzelle verschlechtert. Außerdem ist die Abdichtwirkung der Glaslot-Dichtung aufgrund der nach einiger Betriebszeit einsetzenden Rekristallisation des Glaslots nicht über eine ausreichend lange Betriebsdauer der Dichtung gesichert.

Die DE 43 33 478 A offenbart eine Dichtung gemäß dem Oberbegriff von Anspruch 1.

Die JP 05-343079 A offenbart eine Dichtung zum gasdichten Abdichten zwischen einer Trennplatte und einer Brennstoffzelleneinheit, welche aus einer niedrig schmelzenden metallischen Legierung gebildet ist.

Die DE 196 07 947 C1 offenbart eine Dichtungsanordnung für eine Schmelzkarbonat-Brennstoffzelle, die eine bei Betriebstemperatur der Brennstoffzelle nasse Dichtung aus porösem Lithiumaluminat, das im Betrieb der Brennstoffzelle mit Schmelzkarbonat gefüllt ist, und eine bei Betriebstemperatur der Brennstoffzelle trockene Dichtung umfasst, die aus einer Kombination von Dichtungsstreifen besteht, welche aus Glimmer, Aluminiumoxid, Magnesiumoxid, Ceroxid oder metallischen Werkstoffen gebildet sind.

Der vorliegenden Erfindung liegt die Aufgabe zugrunde, eine Dichtung der eingangs genannten Art zu schaffen, welche auch bei hohen Betriebstemperaturen und über eine lange Betriebsdauer hinweg eine ausreichende Fluiddichtheit und eine ausreichende elektrische Isolationswirkung aufweist.

Diese Aufgabe wird durch eine Dichtung nach Anspruch 1 und durch eine Verwendung einer Dichtung nach Anspruch 18 gelöst.

Der vorliegenden Erfindung liegt somit das Konzept zugrunde, die elektrische Isolationsfunktion und die Fluidabdichtfunktion der Dichtung voneinander zu trennen.

Dabei sorgt die erste Komponente der Dichtung, die aus einem elektrisch isolierenden Material gebildet ist, für die elektrische Isolation der beiden abzudichtenden Bauteile, während die zweite Komponente, die aus einem bei der Betriebstemperatur der Dichtung zumindest bereichsweise flüssigen Material gebildet ist, den von der ersten Komponente nicht überdeckten Rest-Dichtspalt zwischen den abzudichtenden Bauteilen flulddicht verschließt und somit für die erforderliche Fluiddichtheit der Dichtung sorgt. Da diese zweite Komponente bei der Betriebstemperatur der Dichtung zumindest bereichsweise flüssig ist, kann sich die Gestalt der zweiten Komponente so anpassen, dass der Rest-Dichtspalt auch dann zuverlässig überdeckt wird, wenn er seine Gestalt aufgrund von Inkompatibilitäten der Wärmeausdehnungskoeffizienten der abzudichtenden Bauteile und/oder der Dichtungskomponenten und/oder aufgrund von Relativbewegungen der beiden abzudichtenden Bauteile (beispielsweise aufgrund von Schwingungen) ändert.

Die zweite Komponente kann im Betriebszustand der Dichtung neben mindestens einer flüssigen Phase auch mindestens eine feste Phase umfassen.

Um eine möglichst gute Fluiddichtheit der Dichtung zu erzielen, ist es besonders günstig, wenn die zweite Komponente bei der Betriebstemperatur im wesentlichen vollständig flüssig ist.

Da die elektrische Isolationswirkung der Dichtung durch die erste Komponente der Dichtung gewährleistet ist, kann vorgesehen sein, daß die zweite Komponente der Dichtung ein elektrisch leitfähiges Material umfaßt.

Bei einer bevorzugten Ausgestaltung der erfindungsgemäßen Dichtung ist vorgesehen, daß die zweite Komponente ein Metall und/oder eine metallische Legierung umfaßt.

Insbesondere kann vorgesehen sein, daß die zweite Komponente Kupfer enthält.

Ferner kann vorgesehen sein, daß die zweite Komponente Silber enthält.

Besonders günstig ist es, wenn die zweite Komponente eine metallische Legierung umfaßt, die Kupfer und Silber enthält.

Solche Legierungen aus Kupfer und Silber weisen einen Schmelzpunkt auf, der unterhalb der typischen Betriebstemperatur einer Hochtemperatur-Brennstoffzelle liegt, und sind unter den Bedingungen einer Hochtemperatur-Brennstoffzelle wenig reaktiv.

Vorzugsweise ist vorgesehen, daß der Anteil von Kupfer und Silber an der zweiten Komponente zusammengenommen mindestens 50 Gewichts-% beträgt.

Durch Hinzufügen geringer Anteile unedler Metalle zu einer solchen Legierung kann dafür gesorgt werden, daß sich eventuell bildendes Kupferoxid an eine freie Oberfläche der zweiten Komponente transportiert wird.

Das Material der zweiten Komponente kann in Form eines Pulvers und/oder einer Paste in die Dichtung eingebracht werden.

Um eine zuverlässige elektrische Isolationswirkung der Dichtung sicherzustellen, ist vorzugsweise vorgesehen, daß die erste Komponente bei der Betriebstemperatur der Dichtung im wesentlichen fest ist.

Vorzugsweise ist vorgesehen, daß die erste Komponente ein keramisches Material umfaßt. Solcher Materialien weisen auch bei hohen Temperaturen eine gute Formbeständigkeit und einen hohen elektrischen Widerstand auf.

Ein solches keramisches Material der ersten Komponente kann insbesondere zumindest teilweise in Form einer grünen Keramikfolie auf mindestens eines der abzudichtenden Bauteile aufgebracht werden.

Alternativ oder ergänzend hierzu kann auch vorgesehen sein, daß die erste Komponente zumindest teilweise durch ein Spritzverfahren, vorzugsweise durch Flammspritzen, auf mindestens eines der abzudichtenden Bauteile aufgebracht wird.

Besonders günstig ist es, wenn die erste Komponente Aluminiumoxid und/oder Porzellan umfasst.

Eine zuverlässige elektrische Trennung der zweiten Komponente von einem der beiden abzudichtenden Bauteile wird erzielt, wenn die erste Komponente eine mindestens eines der beiden abzudichtenden Bauteile zumindest teilweise überdeckende Beschichtung bildet.

Besonders wirksam zur elektrischen Isolation der zweiten Komponente ist es, wenn vorgesehen ist, dass die erste Komponente beide abzudichtende Bauteile zumindest teilweise überdeckende Beschichtungen bildet.

Anspruch 16 ist auf eine Bauteilgruppe gerichtet, die zwei gegeneinander abzudichtende elektrisch leitfähige Bauteile eines Brennstoffzellenblockverbundes und eine zwischen den beiden Bauteilen angeordnete erfindungsgemäße Dichtung umfasst.

Die erfindungsgemäße Bauteilgruppe eignet sich insbesondere zur Verwendung in einem Brennstoffzellenblockverbund, insbesondere einem Hochtemperatur-Brennstoffzellenblockverbund.

Ein solcher Hochtemperatur-Brennstoffzellenblockverbund umfasst eine Mehrzahl von Hochtemperatur-Brennstoffzelleneinheiten, die eine Betriebstemperatur bis zu 950°C aufweisen und ohne externen Reformer direkt mit einem kohlenwasserstoffhaltigen Brenngas, wie beispielsweise Methan oder Erdgas oder, alternativ hierzu, unter Verwendung eines externen Reformers, mit einem Diesel- oder Benzinkraftstoff betrieben werden können.

Weitere Merkmale und Vorteile der Erfindung sind Gegenstand der nachfolgenden Beschreibung und zeichnerischen Darstellung von Ausführungsbeispielen. In den Zeichnungen zeigen:
- Fig. 1: eine schematische perspektivische Darstellung einer Brennstoffzellenvorrichtung;
- Fig. 2: einen schematischen Längsschnitt durch einen in dem Gehäuse der Brennstoffzellenvorrichtung aus Fig. 1 angeordneten Brennstoffzellenblockverbund;
- Fig. 3: einen schematischen Längsschnitt durch eine KathodenAnoden-Elektrolyt-Einheit mit daran angrenzenden Kontaktplatten;
- Fig. 4: eine schematische perspektivische Explosionsdarstellung zweier in einer Stapelrichtung aufeinanderfolgender Brennstoffzelleneinheiten des Brennstoffzellenblockverbunds aus Fig. 2;
- Fig. 5: eine schematische Draufsicht auf eine Kontaktplatte einer der Brennstoffzelleneinheiten aus Fig. 4;
- Fig. 6: eine schematische Draufsicht auf einen Fluidführungsrahmen einer der Brennstoffzelleneinheiten aus Fig. 4;
- Fig. 7: den rechten Teil eines schematischen Längsschnitts durch drei längs der Stapelrichtung aufeinanderfolgende Brennstoffzelleneinheiten des Brennstoffzellenblockverbunds aus Fig. 2, wobei ein Fluidführungsrahmen einer Brennstoffzelleneinheit über eine ringförmige Dichtung an der Kontaktplatte einer benachbarten Brennstoffzelleneinheit anliegt;
- Fig. 8: einen schematischen Schnitt durch die ringförmige Dichtung aus Fig. 7;
- Fig. 9: einen schematischen Schnitt durch eine zweite Ausführungsform der ringförmigen Dichtung; und
- Fig. 10: einen schematischen Schnitt durch eine dritte Ausführungsform der ringförmigen Dichtung.

Gleiche oder funktional äquivalente Elemente sind in allen Figuren mit denselben Bezugszeichen bezeichnet.

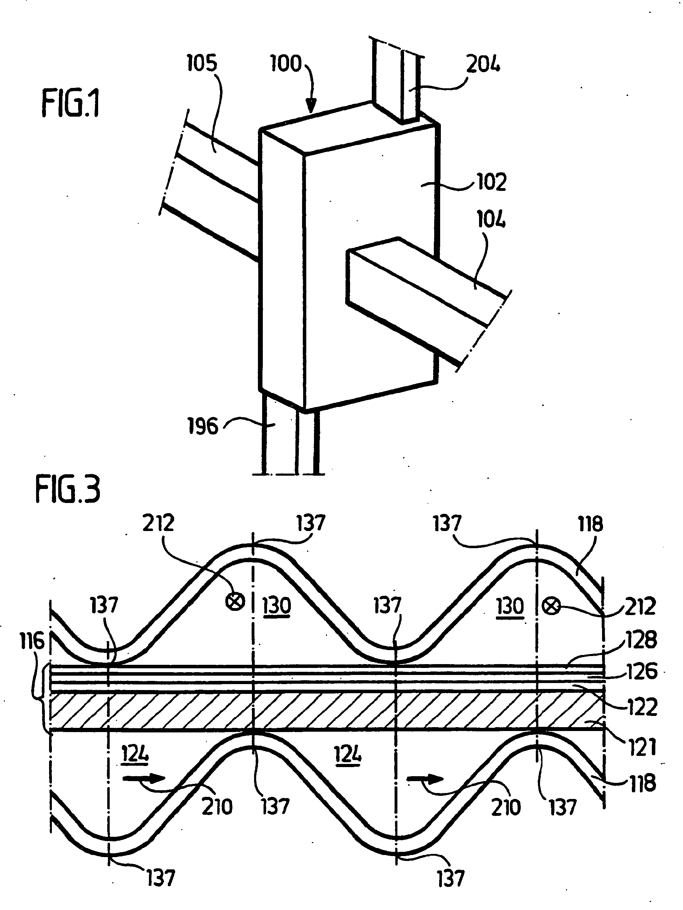

Eine in den Fig. 1 bis 8 dargestellte, als Ganzes mit 100 bezeichnete Brennstoffzellenvorrichtung umfaßt ein im wesentlichen quaderförmiges Gehäuse 102 (siehe Fig. 1), in das eine Oxidationsmittel-Zuführleitung 104 mündet, über die dem Innenraum des Gehäuses 102 ein Oxidationsmittel, beispielsweise Luft oder reiner Sauerstoff, zugeführt wird.

Ferner mündet in das Gehäuse 102 eine Oxidationsmittel-Abführleitung 105, durch welche überschüssiges Oxidationsmittel aus dem Innenraum des Gehäuses 102 abführbar ist.

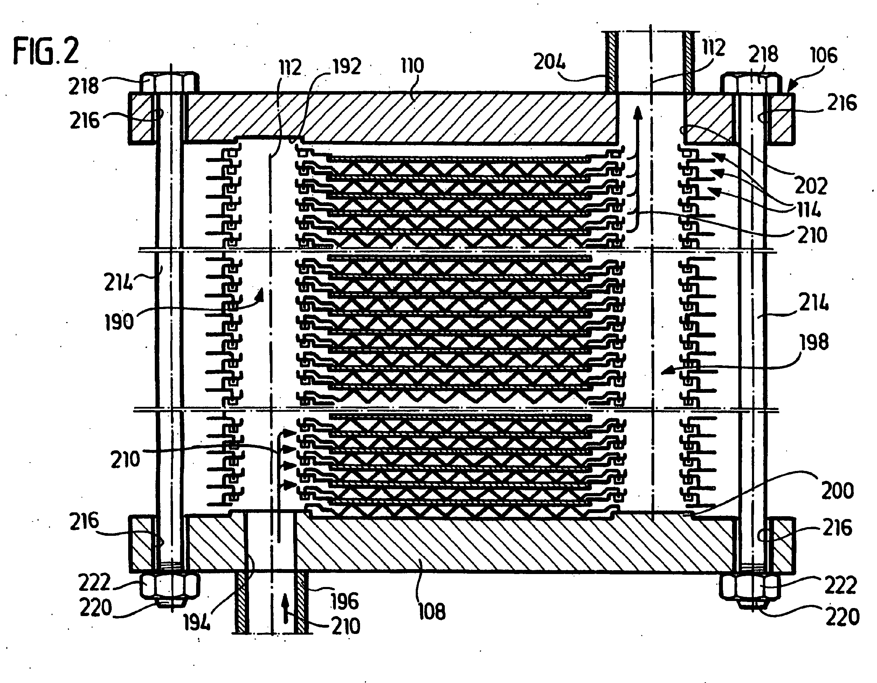

Im Innenraum des Gehäuses 102 ist ein in Fig. 2 als Ganzes dargestellter Brennstoffzellenblockverbund 106 angeordnet, welcher eine untere Endplatte 108, eine obere Endplatte 110 und eine Vielzahl zwischen der unteren Endplatte 108 und der oberen Endplatte 110 angeordneter, längs einer Stapelrichtung 112 aufeinanderfolgender Brennstoffzelleneinheiten 114 umfaßt.

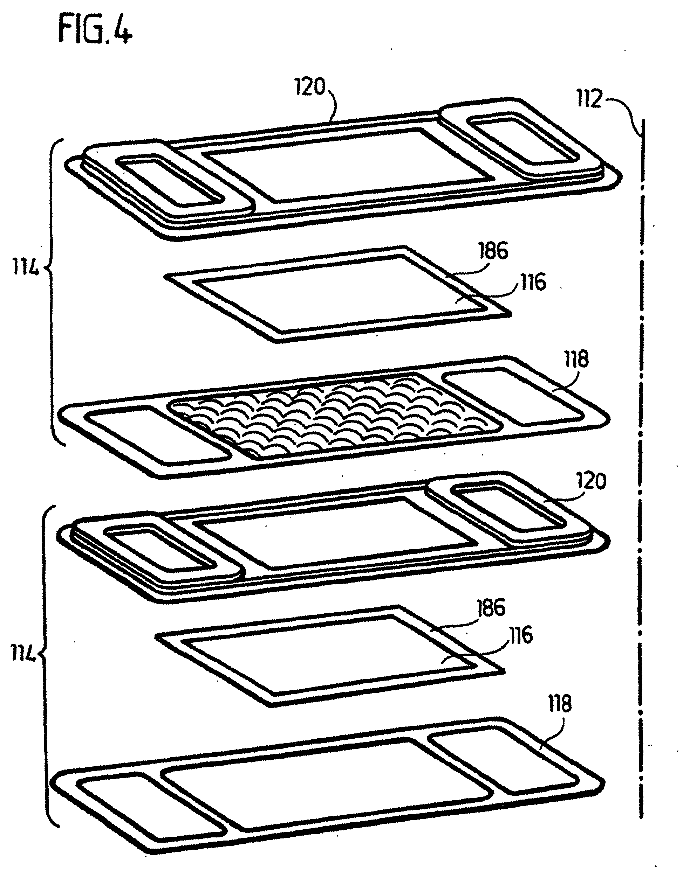

Wie am besten aus Fig. 4 zu ersehen ist, welche eine perspektivische Explosionsdarstellung zweier längs der Stapelrichtung 112 aufeinanderfolgender Brennstoffzelleneinheiten 114 zeigt, umfaßt jede der Brennstoffzelleneinheiten 114 eine im wesentlichen plattenförmige Kathoden-Anoden-Elektrolyt-Einheit 116 (im folgenden kurz: KAE-Einheit), die zwischen einer Kontaktplatte 118 und einem Fluidführungsrahmen 120 gehalten ist.

Die KAE-Einheit 116 umfaßt, wie in Fig. 3 rein schematisch dargestellt ist, eine gasdurchlässige, elektrisch leitfähige Trägerschicht 121, die beispielsweise als Netz aus einem metallischen Material ausgebildet sein kann, durch dessen Maschen ein Brenngas aus einem an die Trägerschicht 121 angrenzenden Brenngasraum 124 hindurchtreten kann.

Ferner umfaßt die KAE-Einheit 116 eine auf der Trägerschicht 121 angeordnete plattenförmige Anode 122 aus einem elektrisch leitfähigen keramischen Material, welches porös ist, um dem Brenngas aus dem Brenngasraum 124 den Durchtritt durch die Anode 122 zu dem an die Anode 122 angrenzenden Elektrolyten 126 zu ermöglichen.

Als Brenngas kann ein kohlenwasserstoffhaltiges Gasgemisch oder reiner Wasserstoff verwendet werden.

Der Elektrolyt 126 ist vorzugsweise als Feststoffelektrolyt ausgebildet.

Auf der der Anode 122 gegenüberliegenden Seite des Elektrolyten 126 grenzt an denselben eine plattenförmige Kathode 128 an, die aus einem elektrisch leitfähigen keramischen Material gebildet ist und eine Porosität aufweist, um einem Oxidationsmittel, beispielsweise Luft oder reinem Sauerstoff, aus einem an die Kathode 128 angrenzenden Oxidationsmittelraum 130 den Durchtritt zu dem Elektrolyten 126 zu ermöglichen.

Im Betrieb der Brennstoffzellenvorrichtung 100 weist die KAE-Einheit 116 jeder Brennstoffzelleneinheit 114 eine Temperatur von beispielsweise ungefähr 800°C auf, bei welcher der Elektrolyt 126 für Sauerstoffionen leitfähig ist. Das Oxidationsmittel aus dem Oxidationsmittelraum 130 nimmt an der Anode 122 Elektronen auf und gibt zweiwertige Sauerstoffionen an den Elektrolyten 126 ab, welche durch den Elektrolyten 126 hindurch zur Anode 122 wandern. An der Anode 122 wird das Brenngas aus dem Brenngasraum 124 durch die Sauerstoffionen aus dem Elektrolyten 126 oxidiert und gibt dabei Elektronen an die Anode 122 ab.

Die Kontaktplatten 118 dienen dazu, die bei der Reaktion an der Anode 122 freiwerdenden Elektronen von der Anode 122 über die Trägerschicht 121 abzuführen bzw. die für die Reaktion an der Kathode 128 benötigten Elektronen der Kathode 128 zuzuführen.

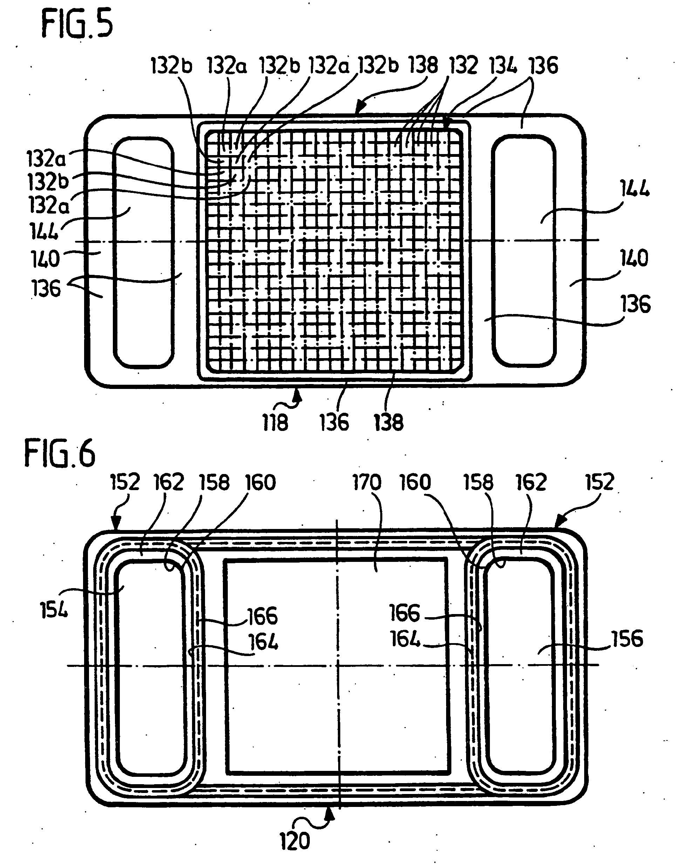

Hierzu besteht jede der Kontaktplatten 118 aus einem elektrisch gut leitfähigen Metallblech, das (wie am besten aus Fig. 5 zu ersehen ist) mit einer Vielzahl von Kontaktelementen 132 versehen ist, welche beispielsweise die Form von aneinander angrenzenden Vorsprüngen und Vertiefungen mit jeweils quadratischem Grundriß aufweisen, so daß das aus den Kontaktelementen 132 gebildete Kontaktfeld 134 der Kontaktplatte 118 die Struktur eines in zwei zueinander senkrechten Richtungen gewellten Wellblechs aufweist.

Jedes der Kontaktelemente 132 weist einen mittigen Kontaktbereich 137 auf, an dem es mit einer angrenzenden KAE-Einheit 116 in elektrisch leitendem Kontakt steht.

Die kathodenseitigen Kontaktelemente 132b der Kontaktplatten 118 stehen mit der Kathode 128 der einer benachbarten Brennstoffzelleneinheit 114 zugehörigen KAE-Einheit 116 in elektrisch leitfähigem Punktkontakt, so daß Elektronen von der Kontaktplatte 118 zu der Kathode 128 gelangen können. Auf diese Weise ermöglichen die Kontaktplatten 118 den Ladungsausgleich zwischen den Anoden 122 und Kathoden 128 längs der Stapelrichtung 112 aufeinanderfolgender KAE-Einheiten 116.

Die an den Enden des Brennstoffzellenblockverbunds 106 angeordneten Kontaktplatten 118 sind mit einem externen Stromkreislauf verbunden, um die an diesen randständigen Kontaktplatten 118 entstehenden elektrischen Ladungen abzugreifen.

Wie am besten aus der Draufsicht der Fig. 5 zu ersehen ist, ist das mit den Kontaktelementen 132 versehene mittige, rechteckige Kontaktfeld 134 jeder Kontaktplatte 118 von einem ebenen Flanschbereich 136 umgeben, welchen den äußeren Rand der Kontaktplatte 118 bildet.

Im Bereich der schmalen Längsseiten 138 des Flanschbereichs 136 liegt die Unterseite der KAE-Einheit 116 auf der Oberseite des Flanschbereichs 136 auf.

Die breiten Seitenbereiche 140 des Flanschbereichs 136 weisen jeweils eine Durchgangsöffnung 144 auf, welche den Durchtritt von den Brennstoffzelleneinheiten 114 zuzuführendem Brenngas bzw. von aus den Brennstoffzelleneinheiten 114 abzuführendem Abgas ermöglicht.

Jede der Kontaktplatten 118 ist als Blechformteil ausgebildet, welches aus einer im wesentlichen ebenen, im wesentlichen rechteckigen Blechlage durch Prägen und/oder Tiefziehen sowie durch Ausstanzen oder Ausschneiden der Durchgangsöffnungen 144 gebildet ist.

Auch die Fluidführungsrahmen 120 sind als Blechformteil aus einer im wesentlichen ebenen, im wesentlichen rechteckigen Blechlage gebildet.

Wie am besten aus Fig. 6 zu ersehen ist, weist jeder Fluidführungsrahmen 120 an seinen Endbereichen den Durchgangsöffnungen 144 in den Kontaktplatten entsprechende Durchgangsöffnungen, nämlich eine Brenngasdurchgangsöffnung 154 und eine Abgasdurchgangsöffnung 156, auf.

Wie aus Fig. 6 zu ersehen ist, weist jeder der Fluidführungsrahmen 120 zwischen den Durchgangsöffnungen 154, 156 eine im wesentlichen rechteckige, mittige Durchtrittsöffnung 170 für den Durchtritt der Kontaktelemente 132 der Kontaktplatte 118 einer benachbarten Brennstoffzelleneinheit 114 auf.

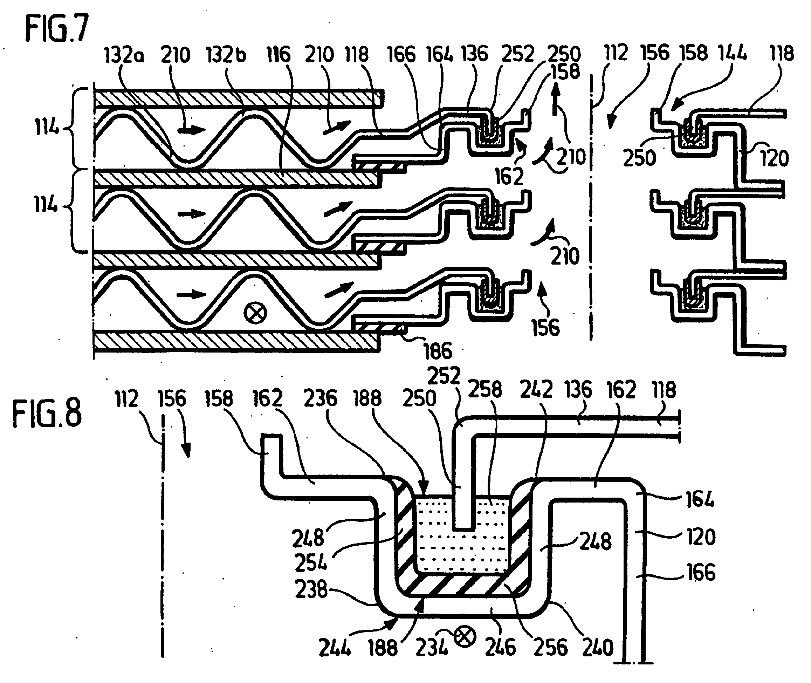

Wie am besten aus den Fig. 6 und 7 zu ersehen ist, ist jede der Durchgangsöffnungen 154, 156 in einem Fluidführungsrahmen 120 von einem sich längs der Stapelrichtung 112 erstreckenden Kragen 158, einem längs einer Biegelinie 160 an den Kragen 158 angrenzenden, sich senkrecht zur Stapelrichtung 112 von der Durchgangsöffnung weg erstreckenden Dichtungsauflagebereich 162 und einem an einer Biegelinie 164 an den Dichtungsauflagebereich 162 angrenzenden, parallel zur Stapelrichtung 112 ausgerichteten Kanalwandbereich 166 umgeben.

Wie aus den Fig. 7 und 8 zu ersehen ist, ist der Dichtungsauflagebereich 162 des Fluidführungsrahmens 120 nicht durchgehend eben ausgebildet, sondern mit einer sich in einer Umfangsrichtung 234 um die jeweilige Durchgangsöffnung 154, 156 herum erstreckenden Vertiefung 244 mit einem Boden 246 und Seitenwänden 248 versehen, welche durch Abkanten an zusätzlichen Biegelinien 236, 238, 240 und 242 ausgebildet ist.

In diese Vertiefung 144 taucht von oben ein sich ebenfalls in der Umfangsrichtung 234 um die jeweilige Durchgangsöffnung 154, 156 herum erstreckender, parallel zu der Stapelrichtung 112 ausgerichteter Kragen 250 ein, welcher an dem Flanschbereich 136 der Kontaktplatte 118 durch Abkanten an einer Biegelinie 252 ausgebildet ist.

Der Zwischenraum zwischen dem Kragen 250 der Kontaktplatte 118 und der Vertiefung 244 in dem Dichtungsauflagebereich 162 des Fluidführungsrahmens 120 ist durch eine Gaskanal-Dichtung 188 vollständig ausgefüllt.

Die ringförmige Gaskanal-Dichtung 188 weist den in Fig. 8 dargestellten Aufbau auf und umfaßt eine Beschichtung 254 aus einem elektrisch isolierenden Material, das bei der Betriebstemperatur der Dichtung von beispielsweise ungefähr 800°C formstabil ist. Diese Beschichtung 254 ist auf der dem Kragen 250 zugewandten Oberseite der Vertiefung 244 angeordnet und überdeckt die Bodenwand 246 und die Seitenwände 248 der Vertiefung 244 vollständig.

Diese Beschichtung 254 bildet eine elektrisch isolierende erste Komponente 256 der Gaskanal-Dichtung 188.

Die Beschichtung 254 besteht vorzugsweise aus einem keramischen Material, beispielsweise aus Al₂O₃ oder aus Porzellan.

Das Material der Beschichtung 254 kann bei der Herstellung der Gaskanal-Dichtung 188 als "grüne Folie", d.h. im noch ungebrannten Zustand, auf die Oberseite des Dichtungsauflagebereichs 162 aufgebracht und bei der Aufheizung der Brennstoffzellenvorrichtung 100 auf die Betriebstemperatur in den keramisierten Zustand überführt werden.

Alternativ hierzu ist es möglich, die keramische Beschichtung 254 durch ein Spritzverfahren, beispielsweise durch Flammspritzen, auf den Dichtungsauflagebereich 162 des Fluidführungsrahmens 120 aufzubringen.

Wie ferner aus Fig. 8 zu ersehen ist, ist der Zwischenraum zwischen der Beschichtung 254 und dem Kragen 250 der Kontaktplatte 118 durch eine zweite Komponente 258 der Gaskanal-Dichtung 188 vollständig ausgefüllt, in welche der untere Rand des Kragens 250 eintaucht.

Diese zweite Komponente 258 der Gaskanal-Dichtung 188 besteht aus einem Material, das bei der Betriebstemperatur der Gaskanal-Dichtung 188 von beispielsweise ungefähr 800°C zumindest bereichsweise flüssig ist.

Dadurch ist gewährleistet, daß die zweite Komponente 258 der Gaskanal-Dichtung 188 im Betriebszustand der Brennstoffzellenvorrichtung ihre Form an den zwischen der Beschichtung 254 und dem Kragen 250 vorhandenen Zwischenraum anpassen kann, so daß dieser Zwischenraum auch dann in zuverlässiger Weise gasdicht abgedichtet ist, wenn dieser Zwischenraum beim Aufheizen in den Betriebszustand - beispielsweise aufgrund unterschiedlicher Wärmeausdehnungskoeffizienten der Materialien der Brennstoffzellenvorrichtung 100 - seine Gestalt verändert.

Als Material für die zweite Komponente 258 der Gaskanal-Dichtung 188 wird vorzugsweise ein bei der Betriebstemperatur der Dichtung flüssiges Metall oder eine bei der Betriebstemperatur der Dichtung flüssige Metall-Legierung verwendet.

Obwohl in diesem Fall die zweite Komponente 258 der Gaskanal-Dichtung 188 elektrisch leitfähig ist, bleibt dennoch die erforderliche Isolationswirkung der Gaskanal-Dichtung 188 bestehen, weil die elektrisch leitfähige zweite Komponente 258 durch die elektrisch isolierende erste Komponente 256 der Gaskanal-Dichtung 188 von dem Fluidführungsrahmen 120 getrennt ist.

Als Material für die zweite Komponente 258 der Gaskanal-Dichtung 188 kann beispielsweise eine metallische Legierung mit der folgenden Zusammensetzung verwendet werden:
- 28 Gewichtsprozent Kupfer; und
- 72 Gewichtsprozent Silber.

Eine solche Kupfer-Silber-Legierung weist eine Schmelztemperatur von ungefähr 780°C auf.

Alternativ hierzu kann als Material der zweiten Komponente 258 auch eine metallische Legierung mit der folgenden Zusammensetzung verwendet werden:
- 57 Gewichtsprozent Silber;
- 27 Gewichtsprozent Kupfer;
- 2 Gewichtsprozent Nickel; und
- 14 Gewichtsprozent Indium.

Diese metallische Legierung weist ein Schmelzintervall von ungefähr 600°C bis ungefähr 710°C auf. Oberhalb von 710°C ist diese metallische Legierung vollständig aufgeschmolzen.

Alternativ hierzu kann als Material für die zweite Komponente 258 der Gaskanal-Dichtung 188 auch eine metallische Legierung mit der folgenden Zusammensetzung verwendet werden:
- 65 Gewichtsprozent Silber;
- 27 Gewichtsprozent Kupfer;
- 2 Gewichtsprozent Zink; und
- 6 Gewichtsprozent Indium.

Diese metallische Legierung weist ein Schmelzintervall von ungefähr 725°C bis ungefähr 780°C auf. Oberhalb von 780°C ist diese metallische Legierung vollständig aufgeschmolzen.

Die metallische Legierung, welche die zweite Komponente 258 der Gaskanal-Dichtung 188 bildet, wird vor der ersten Inbetriebnahme der Brennstoffzellenvorrichtung 100 in Form eines Pulvers oder einer Paste in den Dichtspalt zwischen der Beschichtung 254 und dem Kragen 250 der Kontaktplatte 118 eingebracht. Während des Aufheizens der Brennstoffzellenvorrichtung 100 auf die Betriebstemperatur von beispielsweise ungefähr 800°C schmilzt das Material der zweiten Komponente 258 auf und bildet ein Bad, in welches der Kragen 250 der Kontaktplatte 118 eintaucht und welches einen Durchtritt von Gas durch die Gaskanal-Dichtung 188 im Betrieb der Brennstoffzellenvorrichtung 100 zuverlässig verhindert.

Wie am besten aus den Fig. 4 und 7 zu ersehen ist, ist jede KAE-Einheit 116 am Rand ihrer dem Fluidführungsrahmen 120 derselben Brennstoffzelleneinheit 114 zugewandten Oberseite mit einer gasdichten, elektrisch isolierenden Brenngasraum-Dichtung 186 versehen, die seitlich über die KAE-Einheit 116 übersteht.

Die Brenngasraum-Dichtung 186 kann in derselben Weise ausgebildet sein und hergestellt werden wie die Gaskanal-Dichtung 188.

Alternativ hierzu kann auch vorgesehen sein, daß die Brenngasraum-Dichtung 186 eine Flachdichtung aus Glimmer umfaßt.

Die Brennstoffzelleneinheiten 114 des Brennstoffzellenblockverbunds 106 sind längs der Stapelrichtung 112 so aufeinandergestapelt, daß die kathodenseitigen Kontaktelemente 132b jeder Kontaktplatte 118 sich durch die Durchtrittsöffnung 170 im Fluidführungsrahmen 120 der jeweils darunter angeordneten Brennstoffzelleneinheit 114 zu der Kathode der KAE-Einheit 116 der darunter angeordneten Brennstoffzelleneinheit 114 erstrecken und in elektrisch leitendem Kontakt an derselben anliegen.

Der Flanschbereich 136 jeder Kontaktplatte 118 liegt dabei auf der Gaskanal-Dichtung 188 des Fluidführungsrahmens 120 der jeweils darunter angeordneten Brennstoffzelleneinheit 114 auf, wobei sich der Kragen 158, welcher die Durchgangsöffnung 154 bzw. 156 in dem Fluidführungsrahmen 120 umgibt, in die jeweils entsprechende Durchgangsöffnung 144 der Kontaktplatte 118 hinein erstreckt.

Der die Brenngasdurchgangsöffnung 154 umgebende Endbereich 152 jedes Fluidführungsrahmens 120 bildet einen Brenngasführungsbereich. Der die Abgasdurchgangsöffnung 156 umgebende Endbereich 152 jedes Fluidführungsrahmens 120 bildet einen Abgasführungsbereich.

Wie am besten aus der Schnittdarstellung der Fig. 2 zu ersehen ist, bilden die längs der Stapelrichtung 112 aufeinanderfolgenden Brenngasführungsbereiche der Fluidführungsrahmen 120 zusammen einen sich parallel zur Stapelrichtung 112 erstreckenden Brenngaskanal 190, der an seinem oberen Ende in einer Ausnehmung 192 an der Unterseite der oberen Endplatte 110 mündet.

An dem unteren Ende des Brenngaskanals 190 mündet in denselben eine Brenngaszuführöffnung 194, welche die untere Endplatte 108 des Brennstoffzellenblockverbunds 106 koaxial zu dem Brenngaskanal 190 durchsetzt.

An das dem Brenngaskanal 190 abgewandte Ende der Brenngaszuführöffnung 194 ist eine Brenngaszuführleitung 196 angeschlossen, welche durch das Gehäuse 102 der Brennstoffzellenvorrichtung 100 gasdicht hindurchgeführt und an eine (nicht dargestellte) Brenngaszufuhr angeschlossen ist, welche der Brenngaszuführleitung 196 ein Brenngas, beispielsweise ein kohlenwasserstoffhaltiges Gas oder reinen Wasserstoff, zuführt.

Wie ebenfalls aus Fig. 2 zu ersehen ist, bilden die Abgasführungsbereiche der längs der Stapelrichtung 112 aufeinanderfolgenden Fluidführungsrahmen 120 zusammen einen Abgaskanal 198, der parallel zu der Stapelrichtung 112 ausgerichtet ist und an seinem unteren Ende durch einen an der Oberseite der unteren Endplatte 108 des Brennstoffzellenblockverbunds 106 vorgesehenen Vorsprung 200 verschlossen ist.

An seinem oberen Ende mündet der Abgaskanal 198 in eine zu demselben koaxiale Abgasabführöffnung 202, welche die obere Endplatte 110 des Brennstoffzellenblockverbunds 106 durchsetzt und an ihrem dem Abgaskanal 198 abgewandten Ende an eine Abgasabführleitung 204 angeschlossen ist.

Die Abgasabführleitung 204 ist gasdicht durch das Gehäuse 102 der Brennstoffzellenvorrichtung 100 hindurchgeführt und an eine (nicht dargestellte) Abgasbehandlungseinheit angeschlossen.

Im Betrieb der Brennstoffzellenvorrichtung 100 strömt das Brenngas durch die Brenngaszuführleitung 196 und die Brenngaszuführöffnung 194 in den Brenngaskanal 190 ein und verteilt sich von dort durch die Zwischenräume zwischen den Kontaktplatten 118 und den jeweils derselben Brennstoffzelleneinheit 114 zugehörigen Fluidführungsrahmen 120 auf die Brenngasräume 124 der Brennstoffzelleneinheiten 114, welche jeweils durch die Kontaktplatte 118, den Fluidführungsrahmen 120 und die KAE-Einheit 116 der betreffenden Brennstoffzelleneinheit 116 der betreffenden Brennstoffzelleneinheit 114 umschlossen sind.

Das Brenngas wird zumindest teilweise an der Anode 122 der jeweiligen KAE-Einheit 116 oxidiert.

Das Oxidationsprodukt (beispielsweise Wasser) gelangt zusammen mit überschüssigem Brenngas aus den Brenngasräumen 124 der Brennstoffzelleneinheiten 114 in den Abgaskanal 198, aus welchem es durch die Abgasabführöffnung 202 und die Abgasabführleitung 204 zu der Abgasbehandlungseinheit abgeführt wird.

Das für den Betrieb der Brennstoffzellenvorrichtung 100 benötigte Oxidationsmittel (beispielsweise Luft oder reiner Sauerstoff) wird dem Innenraum des Gehäuses 102 durch die Oxidationsmittel-Zuführleitung 104 zugeführt.

Im Innenraum des Gehäuses 102 verteilt sich das Oxidationsmittel auf die zwischen den Brenngasräumen 124 der Brennstoffzelleneinheiten 114 ausgebildeten Oxidationsmittelräume 130, welche durch jeweils eine Kontaktplatte 118 einer Brennstoffzelleneinheit 114 sowie durch den Fluidführungsrahmen 120 und die Kathode 128 der KAE-Einheit 116 einer benachbarten Brennstoffzelleneinheit 114 umschlossen sind.

In die Oxidationsmittelräume hinein und aus denselben wieder heraus gelangt das Oxidationsmittel durch die Zwischenräume zwischen jeweils einem Fluidführungsrahmen 120 einer Brennstoffzelleneinheit 114 und der Kontaktplatte 118 der in der Stapelrichtung 112 darauffolgenden Brennstoffzelleneinheit 114.

Überschüssiges Oxidationsmittel gelangt aus den Oxidationsmittelräumen 130 der Brennstoffzelleneinheiten 114 auf der der Eintrittsseite des Oxidationsmittels gegenüberliegenden Austrittsseite hinaus und wird durch die Oxidationsmittel-Abführleitung 105 aus dem Innenraum des Gehäuses 102 der Brennstoffzellenvorrichtung 100 abgeführt.

Die Strömungsrichtung des Brenngases und des Abgases durch die Brennstoffzellenvorrichtung 100 ist in den Zeichnungen mit einfachen Pfeilen 210, die Strömungsrichtung des Oxidationsmittels durch die Brennstoffzellenvorrichtung 100 mittels Doppelpfeilen 212 angegeben.

Um die längs der Stapelrichtung 112 aufeinanderfolgenden Brennstoffzelleneinheiten 114 durch äußere Verspannung aneinander festzulegen, sind mehrere Verbindungsschrauben 214 vorgesehen, welche Durchgangsbohrungen 216 in den Endplatten 108, 110 des Brennstoffzellenblockverbunds 106 durchsetzen und an ihrem dem jeweiligen Schraubenkopf 218 abgewandten Ende mit einem Außengewinde 220 versehen sind, in welches jeweils eine Verbindungsmutter 222 eingedreht ist, so daß die Endplatten 108, 110 zwischen den Schraubenköpfen 218 und den Verbindungsmuttern 222 eingespannt sind und eine gewünschte Preßkraft über die Endplatten 108, 110 auf den Stapel der Brennstoffzelleneinheiten 114 übertragbar ist (siehe Fig. 2).

Der vorstehend beschriebene Brennstoffzellenblockverbund 106 wird wie folgt montiert:

Zunächst werden die einzelnen Brennstoffzelleneinheiten 114 montiert, indem jeweils eine KAE-Einheit 116 zwischen einer Kontaktplatte 118 und einem Fluidführungsrahmen 120 angeordnet wird und anschließend die aneinander anliegenden Flanschbereiche 136 der Kontaktplatte 118 sowie der Flanschbereich des Fluidführungsrahmens 120 gasdicht, beispielsweise durch Verschweißen oder Verlöten, miteinander verbunden werden. Anschließend wird das Material der zweiten Komponente 258 der Gaskanal-Dichtungen 188 in Form eines Pulvers oder einer Paste auf die Beschichtung 254 der Dichtungsauflagebereiche 162 der Fluidführungsrahmen 120 aufgetragen. Dann wird der Brennstoffzellenblockverbund 106 aus den einzelnen Brennstoffzelleneinheiten 114 zusammengesetzt, indem die gewünschte Anzahl von Brennstoffzelleneinheiten 114 längs der Stapelrichtung 112 gestapelt wird und die Brennstoffzelleneinheiten 114 mittels der Endplatten 108, 110 und der die Endplatten gegeneinander verspannenden Verbindungsschrauben 214 und Verbindungsmuttern 222 in ihrer Lage relativ zueinander fixiert werden.

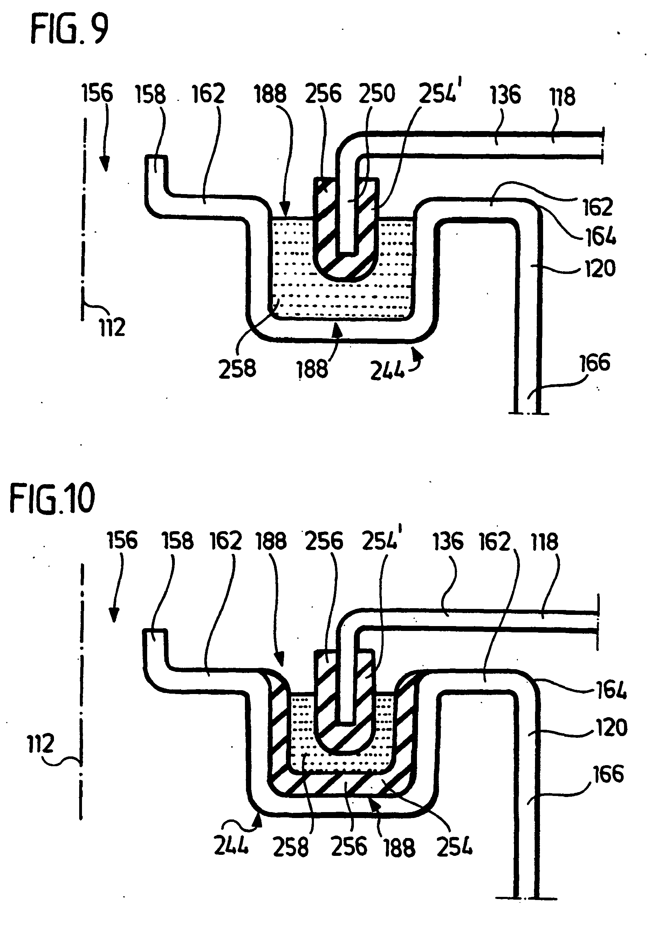

Eine in Fig. 9 dargestellte zweite Ausführungsform einer Brennstoffzellenvorrichtung 100 unterscheidet sich von der vorstehend beschriebenen ersten Ausführungsform durch die Art der Anordnung der ersten Komponente 256 innerhalb der Gaskanal-Dichtung 188.

Wie aus dem schematischen Schnitt der Fig. 9 zu ersehen ist, wird bei dieser zweiten Ausführungsform nicht die Oberseite des Dichtungsauflagebereichs 162 mit einer elektrisch isolierenden Beschichtung versehen, sondern statt dessen der Kragen 250 der Kontaktplatte 118, und zwar dessen Innenseite, dessen Außenseite und dessen unterer Rand. Die elektrisch isolierende Beschichtung 254' des Kragens 250 bildet die elektrisch isolierende Komponente 256 der Gaskanal-Dichtung 188 der zweiten Ausführungsform.

Wie aus Fig. 9 zu ersehen ist, ist der gesamte in die zweite Komponente 258 der Gaskanal-Dichtung 188 eintauchende Bereich des Kragens 250 lückenlos mit der Beschichtung 254' versehen, so daß ein elektrisch leitender Kontakt zwischen der zweiten Komponente 258 und dem Blech des Kragens 250 verhindert wird.

Die Beschichtung 254' kann aus denselben Materialien und auf dieselbe Weise hergestellt werden wie die Beschichtung 254 bei der vorstehend beschriebenen Ausführungsform.

Die zweite Komponente 258 der zweiten Ausführungsform unterscheidet sich von der zweiten Komponente der ersten Ausführungsform lediglich dadurch, daß sie in direktem Kontakt mit der Oberseite des Dichtungsauflagebereichs 162 des Fluidführungsrahmens 120 steht.

Die Materialien und die Herstellungsweise der zweiten Komponente 258 können in derselben Weise gewählt werden wie bei der ersten Ausführungsform.

Im übrigen stimmt die zweite Ausführungsform einer Brennstoffzellenvorrichtung 100 hinsichtlich Aufbau und Funktion mit der ersten Ausführungsform überein, auf deren vorstehende Beschreibung insoweit Bezug genommen wird.

Eine in Fig. 10 dargestellte dritte Ausführungsform einer Brennstoffzellenvorrichtung 100 unterscheidet sich von der vorstehend beschriebenen ersten Ausführungsform dadurch, daß die erste Komponente 256 der Gaskanal-Dichtung 188 zusätzlich zu der elektrisch isolierenden Beschichtung 254 des Dichtungsauflagebereichs 162 des Fluidführungsrahmens 120 eine weitere elektrisch isolierende Beschichtung 254' des Kragens 250 der Kontaktplatte 118 umfaßt.

Wie aus Fig. 10 zu ersehen ist, ist diese zweite Beschichtung 254' ebenso ausgebildet und angeordnet wie die elektrisch isolierende Beschichtung 254' des Kragens 250 bei der vorstehend beschriebenen zweiten Ausführungsform.

Bei der dritten Ausführungsform ist somit die elektrisch leitfähige zweite Komponente 258 der Gaskanal-Dichtung 188 sowohl von dem Kragen 250 der Kontaktplatte 118 als auch von dem Dichtungsauflagebereich 162 des Fluidführungsrahmens 120 durch jeweils eine elektrisch isolierende Schicht getrennt.

Dadurch wird erreicht, daß die Gaskanal-Dichtung 188 auch dann ihre elektrische Isolationswirkung erfüllt, falls eine der Beschichtungen 254 oder 254' schadhaft werden und darum keine ausreichende elektrische Isolationswirkung mehr aufweisen sollte.

Im übrigen stimmt die dritte Ausführungsform einer Brennstoffzellenvorrichtung 100 hinsichtlich Aufbau und Funktion mit der ersten Ausführungsform überein, auf deren vorstehende Beschreibung insoweit Bezug genommen wird.

## Patentansprüche

1. Dichtung, angeordnet zwischen zwei abzudichtenden, elektrisch leitfählgen Bauteilen (118, 120) eines Brennstoffzellenblockverbunds (106), wobei die Dichtung (188) mindestens eine erste Komponente (256) aus einem elektrisch isolierenden Material und eine zweite Komponente (258) aus einem Material, das bei der Betriebstemperatur der Dichtung zumindest bereichsweise flüssig ist, umfasst und wobei die zweite Komponente (258) im Betriebszustand der Dichtung mit höchstens einem der abzudichtenden Bauteile (118, 120) in Kontakt steht,
**dadurch gekennzeichnet,**
**dass** die zweite Komponente (258) ein Metall und/oder eine metallische Legierung umfasst.

2. Dichtung nach Anspruch 1, **dadurch gekennzeichnet, dass** die zweite Komponente (258) bei der Betriebstemperatur der Dichtung (188) im Wesentlichen vollständig flüssig ist.

3. Dichtung nach einem der Ansprüche 1 oder 2, **dadurch gekennzeichnet, dass** die zweite Komponente (258) ein elektrisch leitfähiges Material umfasst.

4. Dichtung nach einem der Ansprüche 1 bis 3, **dadurch gekennzeichnet, dass** die zweite Komponente (258) Kupfer enthält.

5. Dichtung nach einem der Ansprüche 1 bis 4, **dadurch gekennzeichnet, dass** die zweite Komponente Silber enthält.

6. Dichtung nach einem der Ansprüche 1 bis 5, **dadurch gekennzeichnet, dass** die zweite Komponente (258) eine metallische Legierung umfasst, die Kupfer und Silber enthält.

7. Dichtung nach Anspruch 6, **dadurch gekennzeichnet, dass** der Anteil von Kupfer und Silber an der zweiten Komponente (258) zusammengenommen mindestens 50 Gewichtsprozent beträgt.

8. Dichtung nach einem der Ansprüche 1 bis 7, **dadurch gekennzeichnet, dass** das Material der zweiten Komponente (258) in Form eines Pulvers und/oder einer Paste in die Dichtung (188) eingebracht wird.

9. Dichtung nach einem der Ansprüche 1 bis 8, **dadurch gekennzeichnet, dass** die erste Komponente (256) bei der Betriebstemperatur der Dichtung (188) im Wesentlichen fest ist.

10. Dichtung nach einem der Ansprüche 1 bis 9, **dadurch gekennzeichnet, dass** die erste Komponente (256) ein keramisches Material umfasst.

11. Dichtung nach Anspruch 10, **dadurch gekennzeichnet, dass** die erste Komponente (256) zumindest teilweise in Form einer grünen Keramikfolie auf mindestens eines der abzudichtenden Bauteile (118, 120) aufgebracht wird.

12. Dichtung nach einem der Ansprüche 10 oder 11, **dadurch gekennzeichnet, dass** die erste Komponente (256) zumindest teilweise durch ein Spritzverfahren, vorzugsweise durch Flammspritzen, auf mindestens eines der abzudichtenden Bauteile (118, 120) aufgebracht wird.

13. Dichtung nach einem der Ansprüche 10 bis 12, **dadurch gekennzeichnet, dass** die erste Komponente (256) Al₂O₃ und/oder Porzellan umfasst.

14. Dichtung nach einem der Ansprüche 1 bis 13, **dadurch gekennzeichnet, dass** die erste Komponente (256) eine mindestens eines der beiden abzudichtenden Bauteile (118, 120) zumindest teilweise überdeckende Beschichtung (254; 254') bildet.

15. Dichtung nach Anspruch 14, **dadurch gekennzeichnet, dass** die erste Komponente (256) beide abzudichtende Bauteile (118, 120) zumindest teilweise überdeckende Beschichtungen (254, 254') bildet.

16. Bauteilgruppe, umfassend zwei gegeneinander abzudichtende elektrisch leitfähige Bauteile (118, 120) eines Brennstoffzellenblockverbundes (106) und eine zwischen den beiden Bauteilen (118, 120) angeordnete Dichtung (188) nach einem der Ansprüche 1 bis 15.

17. Brennstoffzellenblockverbund, umfassend mindestens eine Bauteilgruppe nach Anspruch 16.

18. Verwendung einer Dichtung, die mindestens eine erste Komponente (256) aus einem elektrisch isolierenden Material und eine zweite Komponente (258) aus einem Material, das bei der Betriebstemperatur der Dichtung zumindest bereichsweise flüssig ist, umfasst,
zur Anordnung zwischen zwei abzudichtenden, elektrisch leitfähigen Bauteilen (118, 120) eines Brennstoffzellenblockverbunds (106),
wobei die zweite Komponente (258) im Betriebszustand der Dichtung mit höchstens einem der abzudichtenden Bauteile (118, 120) in Kontakt steht,
**dadurch gekennzeichnet,**
**dass** die zweite Komponente (258) ein Metall und/oder eine metallische Legierung umfasst.

## Claims

1. A gasket arranged between two electrically conductive components that are to be sealed (118, 120) of a composite fuel cell block (106), wherein the gasket (188) comprises at least a first component (256) consisting of an electrically insulating material and a second component (258) consisting of a material which is liquid at least in portions thereof at the operating temperature of the gasket, and wherein the second component (258) is in contact with at most one of the components that are to be sealed (118, 120) in the operative state of the gasket,
**characterized**
**in that** the second component (258) comprises a metal and/or a metallic alloy.

2. A gasket in accordance with Claim 1, **characterized in that** the second component (258) is substantially completely liquid at the operating temperature of the gasket (188).

3. A gasket in accordance with either of Claims 1 or 2, **characterized in that** the second component (258) comprises an electrically conductive material.

4. A gasket in accordance with any of the Claims 1 to 3, **characterized in that** the second component (258) contains copper.

5. A gasket in accordance with any of the Claims 1 to 4, **characterized in that** the second component contains silver.

6. A gasket in accordance with any of the Claims 1 to 5, **characterized in that** the second component (258) comprises a metallic alloy which contains copper and silver.

7. A gasket in accordance with Claim 6, **characterized in that** the combined proportion of copper and silver in the second component (258) amounts to at least 50 percent by weight.

8. A gasket in accordance with any of the Claims 1 to 7, **characterized in that** the material of the second component (258) is introduced into the gasket (188) in the form of a powder and/or a paste.

9. A gasket in accordance with any of the Claims 1 to 8, **characterized in that** the first component (256) is substantially solid at the operating temperature of the gasket (188).

10. A gasket in accordance with any of the Claims 1 to 9, **characterized in that** the first component (256) comprises a ceramic material.

11. A gasket in accordance with Claim 10, **characterized in that** the first component (256) is applied to at least one of the components that are to be sealed (118, 120) at least partly in the form of a green ceramic foil.

12. A gasket in accordance with either of the Claims 10 or 11, **characterized in that** the first component (256) is applied to at least one of the components that are to be sealed (118, 120) at least partly by means of a spraying process, preferably by means of a flame spraying process.

13. A gasket in accordance with any of the Claims 10 to 12, **characterized in that** the first component (256) comprises Al₂O₃ and/or porcelain.

14. A gasket in accordance with any of the Claims 1 to 13, **characterized in that** the first component (256) forms a coating (254; 254') which at least partially covers at least one of the two components that are to be sealed (118, 120).

15. A gasket in accordance with Claim 14, **characterized in that** the first component (256) forms coatings (254, 254') which at least partially cover both of the components that are to be sealed (118, 120).

16. An assembly comprising two electrically conductive components that are to be mutually sealed (118, 120) of a composite fuel cell block (106) and a gasket (188) in accordance with any of the Claims 1 to 15 which is arranged between the two components (118, 120).

17. A composite fuel cell block comprising at least one assembly in accordance with Claim 16.

18. Use of a gasket which comprises at least a first component (256) consisting of an electrically insulating material and a second component (258) consisting of a material which is liquid at least in portions thereof at the operating temperature of the gasket, wherein said gasket is arrangeable between two electrically conductive components (118, 120) that are to be sealed of a composite fuel cell block (106) and wherein the second component (258) is in contact with at most one of the components that are to be sealed (118, 120) in the operative state of the gasket,
**characterized**
**in that** the second component (258) comprises a metal and/or a metallic alloy.

## Revendications

1. Joint d'étanchéité, disposé entre deux composants (118, 120) électroconducteurs à étancher dans un ensemble de piles à combustible (106), le joint d'étanchéité (188) comprenant au moins un premier constituant (256) en matériau électro-isolant et un deuxième constituant (258) dans un matériau devenant liquide au moins dans certaines zones sous l'effet de la température d'utilisation du joint d'étanchéité, et le deuxième constituant (258), dans la position d'utilisation du joint d'étanchéité, étant en contact tout au plus avec un des composants (118, 120) à étancher, **caractérisé en ce que** le deuxième constituant (258) comprend un métal et/ou un alliage métallique.

2. Joint d'étanchéité selon la revendication 1, **caractérisé en ce que** le deuxième constituant (258) est sensiblement totalement liquide à la tem-pérature d'utilisation du joint d'étanchéité (188).

3. Joint d'étanchéité selon la revendication 1 ou 2, **caractérisé en ce que** le deuxième constituant (258) comprend un matériau électroconducteur.

4. Joint d'étanchéité selon l'une quelconque des revendications 1 à 3, **caractérisé en ce que** le deuxième constituant (258) contient du cuivre.

5. Joint d'étanchéité selon l'une quelconque des revendications 1 à 4, **caractérisé en ce que** le deuxième constituant contient de l'argent.

6. Joint d'étanchéité selon l'une quelconque des revendications 1 à 5, **caractérisé en ce que** le deuxième constituant (258) comprend un alliage métallique contenant du cuivre et de l'argent.

7. Joint d'étanchéité selon la revendication 6, **caractérisé en ce que** la teneur en cuivre et en argent dans le deuxième constituant (258) correspond conjointement à au moins 50 % en poids.

8. Joint d'étanchéité selon l'une quelconque des revendications 1 à 7, **caractérisé en ce que** le matériau du deuxième constituant (258) est introduit sous la forme d'une poudre et/ou d'une pâte dans le joint d'étanchéité (188).

9. Joint d'étanchéité selon l'une quelconque des revendications 1 à 8, **caractérisé en ce que** le premier constituant (256) est sensiblement solide à la température d'utilisation du joint d'étanchéité (188).

10. Joint d'étanchéité selon l'une quelconque des revendications 1 à 9, **caractérisé en ce que** le premier constituant (256) comprend un maté-riau céramique.

11. Joint d'étanchéité selon la revendication 10, **caractérisé en ce que** le premier constituant (256) est appliqué, au moins en partie sous la forme d'une feuille de céramique brute, sur au moins un des composants (118, 120) à étancher.

12. Joint d'étanchéité selon la revendication 10 ou 11, **caractérisé en ce que** le premier consti-tuant (256) est appliqué sur au moins un des composants (118, 120) à étancher, au moins en partie par un procédé de projection, de préfé-rence un procédé de projection à la flamme.

13. Joint d'étanchéité selon l'une quelconque des revendications 10 à 12, **caractérisés en ce que** le premier constituant (256) comprend du Al₂O₃ et/ou de la porcelaine.

14. Joint d'étanchéité selon l'une quelconque des revendications 1 à 13, **caractérisé en ce que** le premier constituant (256) forme un revêtement (254 ; 254') recouvrant au moins en partie au moins un des deux composants (118, 120) à étancher.

15. Joint d'étanchéité selon la revendication 14, **caractérisé en ce que** le premier constituant (256) forme des revêtements (254, 254') recouvrant au moins en partie les deux composants (118, 120) à étancher.

16. Groupe de composants, comprenant deux composants (118, 120) électroconducteurs d'un ensemble de piles à combustible (106) à étancher l'un par rapport à l'autre et un joint d'étanchéité (188) selon l'une quelconque des revendications 1 à 15, disposé entre les deux composants (118, 120).

17. Ensemble de piles à combustible, comprenant au moins un groupe de composants selon la revendication 16.

18. Utilisation d'un joint d'étanchéité comprenant au moins un premier constituant (256) en matériau électro-isolant et un deuxième constituant (258) en matériau devenant liquide au moins dans certaines zones sous l'effet de la température d'utilisation du joint d'étanchéité, ledit joint d'étanchéité est destiné à être disposé entre deux composants (118, 120) électro-conducteurs à étancher d'un ensemble de piles à combustible (106), le deuxième constituant (258), dans la position d'utilisation du joint d'étanchéité, étant en contact tout au plus avec un des composants (118, 120) à étancher, **caractérisé en ce que** le deuxième constituant (258) comprend un métal et/ou un alliage métallique.
